# EUROPÄISCHE PATENTSCHRIFT

(11) **EP 1 060 957 B1**
(45) Veröffentlichungstag und Bekanntmachung des Hinweises auf die Patenterteilung: **13.10.2004**
(21) Anmeldenummer: 00111938.7
(22) Anmeldetag: 15.06.2000
(51) Int. Cl.: B60R 21/20

(54) **Baueinheit für ein Gassack-Modul und Gassack-Modul**
Airbag module unit, and airbag module
Ensemble module de coussin de sécurité, et module

(30) Priorität: 18.06.1999 DE 29910711 U
(43) Veröffentlichungstag der Anmeldung: 20.12.2000
(73) Patentinhaber: TRW Automotive Safety Systems GmbH, 63743 Aschaffenburg (DE)
(72) Erfinder: Paule, Thomas, 63864 Glattbach (DE); Schütz, Dominik, 63857 Waldaschaff (DE)
(74) Vertreter: Kitzhofer, Thomas, Dipl.-Ing.

(56) Entgegenhaltungen:
- EP-A- 0 573 145
- EP-A- 0 819 583
- EP-A- 0 834 429
- DE-U- 29 816 568
- US-A- 5 141 247
- US-A- 5 562 301
- US-A- 5 615 907

## Beschreibung

Die Erfindung betrifft eine Baueinheit für ein Gassack-Modul, insbesondere ein Lenkrad-Gassack-Modul, bestehend aus einem Gasgeneratorträger und einer Abdeckkappe. Eine solche Baueinheit ist beispielsweise aus dem Dokument US 5615907 A bekannt.

Die Erfindung betrifft darüber hinaus ein Gassack-Modul mit einer erfindungsgemäßen Baueinheit sowie einem Gasgenerator und einem Gassack.

Die Abdeckkappe eines Lenkrad-Gassack-Moduls ist üblicherweise aus Kunststoff und ist im eingebauten Zustand des Moduls vorderseitig sichtbar. Gasgenerator und Gassack werden rückseitig in die behälterförmige Abdeckkappe eingesetzt. Ein sogenannter Gasgeneratorträger aus Blech wird an der Abdeckkappe mittels Nieten oder Haken befestigt und bildet die nach dem Einsetzen von Gassack und Gasgenerator zu schließende Rückseite der Abdeckkappe. An diesem Gasgeneratorträger wird der Gasgenerator befestigt, und das gesamte Modul wird über diesen Träger am Lenkrad angebracht. Es versteht sich deshalb, daß der Gasgeneratorträger sehr stabil ausgebildet sein muß und die Verbindung zwischen Gasgeneratorträger und Abdeckkappe hohen Zugkräften standhalten muß. Beim Öffnen der Abdeckkappe durch den sich entfaltenden Gassack werden nämlich hohe Kräfte auf die Abdeckkappe und damit auf die Verbindung zwischen Abdeckkappe und Gasgeneratorträger ausgeübt. Die bisherigen Verbindungen von Gasgeneratorträger und Abdeckkappe, nämlich Nieten und Haken, führten zu hohen Lochleibungsdrücken in den Nieten- oder Hakenfenstern. Die Gefahr des Ausreißens der Kunststoffabdeckkappe wurde durch aufwendige Hinterschnitte zur Kraftaufnahme in der Kappe reduziert, die aber nur mittels aufwendiger Spritzwerkzeuge realisiert werden konnten. Zudem mußten die Nieten oder Haken möglichst weit entfernt vom Gassack und damit nahe an der Rückseite der Abdeckkappe platziert sein, damit ein Kontakt mit dem Gassack und ein Einreißen des Gassacks durch die Nieten vermieden wird. Das bedeutet aber, daß die Nieten sehr nahe am rückseitigen Rand der Abdeckkappe angebracht werden müßten; ggf. sogar zusätzlicher Bauraum benötigt wurde, um ein Ausreißen der Abdeckkappe auszuschließen. Die Verbindung von Abdeckkappe und Gasgeneratorträger mittels Nieten oder Umbiegen von Haken ist zudem sehr aufwendig.

Die Erfindung schafft eine einfache und stabile Baueinheit für ein Gassack-Modul, insbesondere ein Lenkrad-Gassack-Modul, welches sich zudem auch durch einen geringen Bauraum und eine hohe Kräfte übertragende Verbindung zwischen Gasgeneratorträger und Abdeckkappe auszeichnet. Dies wird bei einer Baueinheit der eingangs genannten Art dadurch erreicht, daß der Gasgeneratorträger aus einem ausgestanzten und umgeformten Blechabschnitt besteht, der randseitig formschlüssig in die aus Kunststoff bestehende Abdeckkappe eingebunden ist und der Laschen aufweist, die einwärts und aufeinander zu umklappbar sind, um einen durch die Abdeckkappe und den Gasgeneratorträger begrenzten Aufnahmeraum für den Gassack rückseitig zu schließen. Bei der erfindungsgemäßen Baueinheit sind keine zusätzlichen Teile wie Nieten oder am Gasgeneratorträger angeformte Haken erforderlich. Vielmehr ist der Gasgeneratorträger selbst in die Abdeckkappe eingebunden, d.h. in sie formschlüssig eingebettet. Eine optimale Einbettung des Blechabschnitts in die Abdeckkappe kann dadurch erreicht werden, daß der Blechabschnitt Ausnehmungen oder Vorsprünge hat, die von der Abdeckkappe durchdrungen werden. Die umgeklappten Laschen bilden in fertig montiertem Zustand zusammen mit anderen Teilen des Gassack-Moduls eine stabile Montagebasis.

Vorzugsweise ist der Blechabschnitt bei der gießtechnischen oder spritzgießtechnischen Herstellung der Abdeckkappe formschlüssig in sie eingebunden. Der flüssige Kunststoff kann dann auch wirklich sämtliche Ausnehmungen im Gasgeneratorträger ausfüllen.

Die Laschen sind etwa rechtwinklig um Biegelinien umklappbar, längs derer im Blechabschnitt eine Materialschwächung, z.B. eine Perforation, ausgebildet ist.

Die Stabilität des gesamten Gehäuses kann dadurch erhöht werden, daß der Blechabschnitt einen Randbereich aufweist, der durch Abkanten oder dergleichen zu einem umlaufenden Rand umgeformt ist. In diesem umlaufenden Rand kann der Blechabschnitt in die Abdeckkappe eingebettet sein. Dieser Randbereich weist auch vorzugsweise die Aussparungen für den formschlüssigen Eingriff des Kunststoffmaterials auf.

Der Blechabschnitt hat gemäß der bevorzugten Ausführungsform mehrere umklappbare Laschen, die am umlaufenden Rand vorzugsweise paarweise einander gegenüberliegend angeordnet sind.

Mit dem Umklappen der Laschen wird dann die Rückseite des durch die Abdeckkappe und den Gasgeneratorträger gebildeten Gehäuses des Gassack-Moduls geschlossen, nachdem Gassack mit Gassackhalteblech und eventuell auch Gasgenerator (je nach angestrebtem System) in die Abdeckkappe eingesetzt worden sind.

Eine platzsparende Möglichkeit der Befestigung der erfindungsgemäßen Baueinheit am Fahrzeug wird dadurch erreicht, daß die Laschen jeweils wenigstens einen nach außen vorstehenden Montageflansch aufweisen. Darüber hinaus können die Laschen Befestigungseinrichtungen tragen, mittels denen das Gassackmodul am Fahrzeug arretiert wird. Als Befestigungseinrichtungensind hier zum Beispiel sogenannte Einschnappbolzen, Einpressmuttern oder dergleichen möglich, die an den Laschen angebracht sind. Auch andere Befestigungseinrichtungen sind sehr einfach in die Laschen integrierbar.

An ihrem freien Rand haben die Laschen zudem eine Kunststoffeinfassung, die ein Klemmen dieses freien Randes erleichtert. Der freie Rand mit der Kunststoffeinfassung kann darüber hinaus der Hubkontaktaufnahme, der exakten Positionierung des Gasgenerators in axialer Richtung, damit er definiert aus dem Modul heraussteht oder der Führung des Gassackmoduls dienen. Die Kunststoffumfassung läßt eine komplizierte Formgebung zu.

Nach dem Umklappen der Laschen um etwa 90° bilden diese Abschnitte eines Bodenbereichs, der eine Ausnehmung für die Anordnung des Gasgenerators sowie Öffnungen für Verbindungsschrauben aufweist. Der Gasgenerator kann über diese Ausnehmung nach außen aus dem Gehäuse des Gassack-Moduls herausragen. Die Öffnungen für die Verbindungsschrauben erlauben das Arretieren des Gasgenerators und eines Gassackhalteblechs am Gasgeneratorträger. Damit werden sämtliche Einzelteile zu einem Gassack-Modul verbunden, bei dem der Rand der Einblasöffnung des Gassacks zwischen dem Gassackhalteblech und dem freien Rand der Laschen geklemmt ist.

Die Erfindung betrifft darüber hinaus ein Gassack-Modul mit einer erfindungsgemäßen Baueinheit, bei der die Laschen nach dem Umklappen um 90° Abschnitte eines Bodenbereichs bilden, der eine Ausnehmung für die Anordnung des Gasgenerators sowie Öffnungen für Verbindungsschrauben aufweist. Mittels der Verbindungsschrauben werden ein Gassackhalteblech und der Flansch des Gasgenerators mit dem Gasgeneratorträger zu einem Gassack-Modul verbunden. Der Rand der Einblasöffnung des Gassacks wird zwischen dem Gassackhalteblech und dem freien Rand der Laschen geklemmt. Das erfindungsgemäße Gassack-Modul zeichnet sich durch eine einfache und stabile Verbindung von Gassackhalteblech mit Gasgenerator und Gasgeneratorträger aus. Darüber hinaus sind die Laschen stabil an der Abdeckkappe befestigt. Der Gasgenerator ist vorzugsweise unmittelbar an den Laschen befestigt, d.h. ohne Zwischenlage anderer Teile. Gasgenerator, Laschen und Halteblech ergänzen sich gegenseitig zur Schaffung einer stabilen Basis.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Querschnittsansicht durch eine Ausführungsform der erfindungsgemäßen Baueinheit, wobei die linke Hälfte die Baueinheit mit offener Lasche und die rechte Hälfte das gesamte Gassack-Modul mit erfindungsgemäßer Baueinheit, mit eingesetztem Gassack und Gasgenerator bei umgeklappter Lasche zeigt,
- Figur 2 eine verkleinerte Draufsicht des in die Abdeckkappe noch nicht eingebundenen Gasgeneratorträgers,
- Figur 3 eine Schnittansicht des Gasgeneratorträgers nach der Linie III-III in Figur 2,
- Figur 4 eine Seitenansicht des Gasgeneratorträgers,
- Figur 5 eine Querschnittsansicht durch eine weitere Ausführungsform der erfindungsgemäßen Baueinheit, wobei hier auch wieder die linke Hälfte die Baueinheit mit offener Lasche und die rechte Hälfte das gesamte Gassack-Modul mit erfindungsgemäßer Baueinheit, mit eingesetztem Gassack und Gasgenerator bei umgeklappter Lasche zeigt,
- Figur 6 eine Draufsicht des in die Abdeckkappe noch nicht eingebundenen Gasgeneratorträgers, der in der Ausführungsform nach Figur 5 dargestellt ist, und
- Figur 7 eine Abwicklung des in Figur 6 dargestellten Gasgeneratorträgers noch vor dessen Weiterverarbeitung.

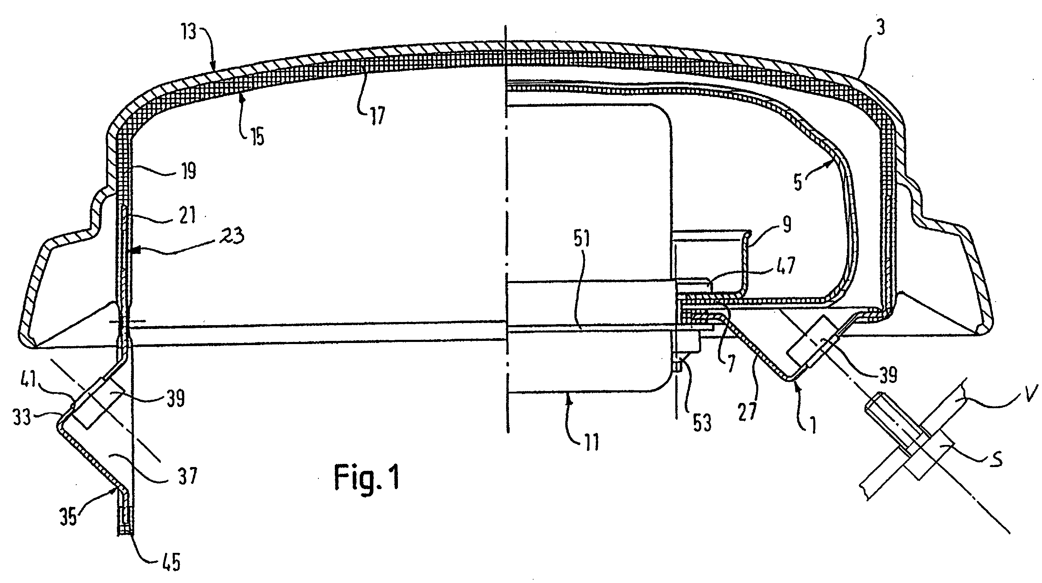

In Figur 1 ist in der rechten Hälfte ein Gassack-Modul dargestellt, das unter anderem folgende Teile aufweist: eine Baueinheit für das Gassack-Modul, bestehend aus einem Gasgeneratorträger 1, der durch einen ausgestanzten und umgeformten Blechabschnitt gebildet ist, und bestehend aus einer topfförmigen Abdeckkappe 3. Darüber hinaus weist das Gassack-Modul einen in der Abdeckkappe 3 untergebrachten, gefalteten Gassack 5 auf, ein den Rand 7 der sogenannten Einblasöffnung des Gassacks 5 innenseitig umgebendes Gassackhalteblech 9 und einen großteils in das Innere der Abdeckkappe 3 hineinragenden Gasgenerator 11.

Die Abdeckkappe 3 ist eine sogenannte Zweikomponenten-Abdeckkappe, mit einer haptisch und optisch ansprechenden Außenschicht 13 und einer harten, innenseitigen Trägerschicht 15. Die Schicht 15 hat eine Vorderwand 17 sowie eine umlaufende Seitenwand 19. In die Seitenwand 19 ist bei der gießtechnischen Herstellung der Abdeckkappe 3 ein Rand 21 des Gasgeneratorträgers 1 eingebunden oder eingebettet. Der Rand 21 wird dabei umspritzt oder umschäumt, wodurch sich nicht nur eine adhäsive, sondern auch eine formschlüssige Verbindung zwischen dem Gasgeneratorträger 1 und der Schicht 15 der Abdeckkappe 3 ergibt.

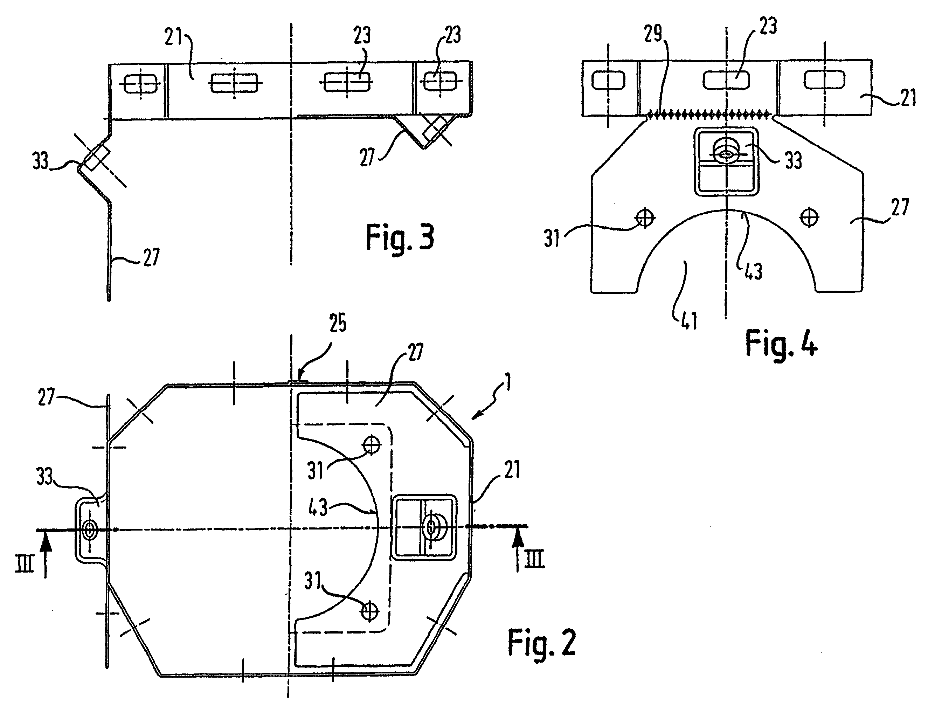

Zur Schaffung einer optimalen, hohe Kräfte übertragenden Verbindung zwischen dem Gasgeneratorträger 1 und der Abdeckkappe 13 weist der Gasgeneratorträger 1 im Rand 21 zahlreiche Aussparungen 23 auf, die in Figur 3 gut zu erkennen sind. Beim gießtechnischen Herstellen der Abdeckkappe 1 dringt damit Kunststoff in die Aussparungen 23 ein, so daß sich ein Formschluß zwischen Abdeckkappe 3 und Gasgeneratorträger 1 ergibt.

Im folgenden wird anhand der Figuren 2 bis 4 die Ausgestaltung des Gasgeneratorträgers 1 näher erläutert, bevor die in Figur 1 gezeigten Einzelheiten des Gassack-Moduls weiter erläutert werden.

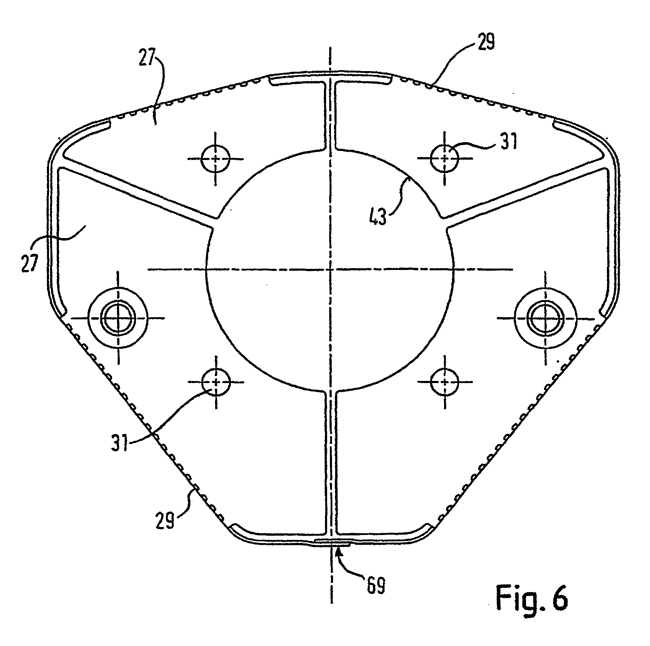

Der Gasgeneratorträger 1 wird aus einem ausgestanzten Blechabschnitt durch Umformen hergestellt. Der bereits erläuterte Rand 21 wird durch Abkanten des Randbereichs des Blechabschnitts gebildet. Damit der Rand 21 auch vollständig umläuft (vgl. Figur 2), kann es notwendig sein, abgekantete Abschnitte miteinander z.B. durch Punktschweißen oder durch Vergießen mittels Kunststoff, der übereinanderliegende Aussparungen 23 durchdringt, zu verbinden. Das Punktschweißen ist in Figur 2 an der mit 25 bezeichneten Stelle und das Vergießen mittels Kunststoff in Figur 6 an der mit 69 bezeichneten Stelle angedeutet. Wie Figur 2 weiter zu entnehmen ist, weist der Rand an seinem gesamten Umfang zahlreiche, voneinander beabstandete Ausnehmungen 23 auf. An gegenüberliegenden Seiten des Randes 21 sind zwei Laschen 27 einstückig an den Rand 21 angeformt. Im Übergangsbereich ist eine Perforation oder Materialschwächung 29 vorgesehen, welche ein Scharnier zum Umbiegen der Laschen 27 definiert. Die beiden Laschen 27 bilden jeweils eine Hälfte eines Bodenbereichs des Gehäuses des Gassack-Moduls, welches aus der topfförmigen Abdeckkappe 3 und dem Gasgeneratorträger 1 gebildet ist. Durch die Laschen 27 kann das Gehäuse geschlossen werden, wobei die Laschen den Bodenbereich des Gehäuses bilden. Die Laschen 27 haben Ausnehmungen 31, die der Arretierung des Gasgenerators 11 dienen. Darüber hinaus ist an jeder Lasche 27 ein unter etwa 45° nach außen vorstehender Montageflansch 33 ausgebildet. Der Montageflansch 33 wird durch eine Fläche einer dachförmigen lokalen Umformung 35 in jeder Lasche 27 gebildet. Die sich durch die Umformung ergebende Ausnehmung 37 kann zur Unterbringung eines Schraubenkopfes oder einer am Montageflansch 33 angeschweißten Mutter 39 dienen. Mit 41 ist eine Durchgangsöffnung im Montageflansch 33 bezeichnet.

Der Gasgeneratorträger 1 zeichnet sich durch eine einfache Herstellung und eine hohe Stabilität auf, denn der Rand 21 ist umlaufend und geschlossen, so daß er eine Art Rahmen bildet.

Jede Lasche 27 hat eine halbkreisförmige, große Ausnehmung 41, die sich, wenn beide Laschen 27 nach innen umgeklappt sind, zu einer kreisförmigen Ausnehmung ergänzen. Die Laschen werden dabei so weit umgeklappt, daß sie eine im wesentlichen in einer Ebene liegende Montagebasis bilden. Im Bereich der Ausnehmungen 41 hat jede Lasche einen freien Rand 43. Beim Spritzen der Abdeckkappe 3 wird an den freien Rand 43 jeder Lasche 27 eine sogenannte Kunststoffeinfassung 45 angespritzt, die in Figur 1 in der linken Hälfte besonders gut zu sehen ist.

Im folgenden wird eine Möglichkeit des Zusammenbaus des erfindungsgemäßen Gassack-Moduls erläutert.

Im noch nicht montierten Zustand stehen die beiden Laschen 27, wie in Figur 1, links, dargestellt, nach unten vor, so daß die Abdeckkappe 3 vollständig offen ist. In die Abdeckkappe 3 wird dann der Gassack 5 mit dem sich darin befindlichen Gassackhalteblech 9 eingelegt, wobei mehrere Verbindungsschrauben 47, deren Kopf im Inneren des Gassacks liegt, bereits eingebracht sind und durch Öffnungen im Gassackhalteblech 9 und im Gassack 5 ragen. Anschließend werden die Laschen 27 um 90° nach innen geklappt, so daß die Verbindungsschrauben 47 durch die Öffnungen 31 dringen. Schließlich wird von unten über die durch die Ausnehmungen 41 gebildete Öffnung der Gasgenerator 11 eingeschoben, bis ein an seinem Gehäuse radial abstehender Flansch 51 an den Laschen 27 anliegt. Der Gasgenerator 11 ist somit ohne Einfügung eines Zwischenteils unmittelbar am Gasgeneratorträger befestigt. Auch der Flansch 51 hat nicht gezeigte Öffnungen, durch die sich die Verbindungsschrauben 47 erstrecken können. Muttern 53 werden schließlich auf die Schaftenden der Verbindungsschrauben 47 aufgeschraubt. Damit werden zwischen dem Kopf der Verbindungsschrauben 47 und der Mutter das Gassackhalteblech 9, der Rand 7 des Gassacks, der Rand 43 der Laschen 27 mit der Kunststoffeinfassung 45 und der Flansch 51 aneinander geklemmt. Diese Teile sind damit fest miteinander verbunden und stabilisieren sich gegenseitig, so daß der Gasgeneratorträger 1 mit dem an ihm befestigten Teilen eine stabile Montagebasis für das gesamte Gassack-Modul bildet, das im Fahrzeug befestigt werden muß.

Diese Befestigung des Gassack-Moduls am Fahrzeug erfolgt durch Schrauben, die durch die Öffnungen 41 in die Muttern 39 eingedreht werden können. Hierzu ist auf der rechten Seite von Fig. 1 eine Schraube 5 sowie ein Abschnitt V der fahrzeugseitigen Lenkradstruktur gezeigt. Damit wird der Montageflansch 7 gegen den in Fig. 1 gezeigten Abschnitt V des ansonsten nicht gezeigten Lenkrads gepreßt und daran arretiert. Die 45° abstehenden Montageflansche erlauben ein leichtes Anschrauben des GassackModuls schräg von der Rückseite der Nabe des Lenkrades aus, wodurch sich eine gute Zugänglichkeit für die Montage ergibt.

Beim Entfalten des Gassacks wird die Abdeckkappe 3 an der Vorderseite aufgerissen, so daß der Gassack in Richtung Insassen gelangen kann. Die beim Aufreißen der Abdeckkappe 3 in diese eingebrachten hohen Kräfte werden über die stabile Verbindung mit dem Gasgeneratorträger 1 in das Lenkrad eingeleitet. Ein Ausreißen der Verbindung zwischen Abdeckkappe 3 und Gasgeneratorträger 1 kann durch die Einbettung des Gasgeneratorträgers 1 in die Abdeckkappe 3 vermieden werden.

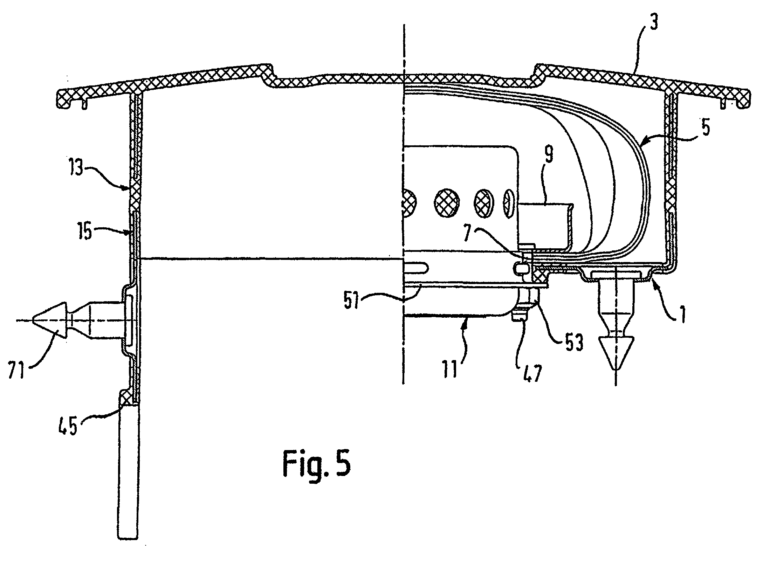

Die in Figur 5 dargestellte Ausführungsform entspricht im wesentlichen der zuvor bereits erläuterten. Jedoch ist hier kein unter 45° abstehender Montageflansch vorhanden. Vielmehr erstreckt sich der Bodenbereich, der durch die Laschen 27 gebildet wird, im wesentlichen 90° zur Seitenwand 19. Als Befestigungseinrichtung ist an jeder Lasche 27 ein sogenannter Einschnappbolzen 71 befestigt, der eine Rastverbindung des Gassack-Moduls am Fahrzeug erlaubt. Die Rastbolzen 71 sind in die Laschen 27 kraftschlüssig eingepreßt.

Als weiterer Unterschied sind nicht nur zwei, sondern insgesamt sogar vier Laschen 27 vorgesehen, die nach dem Umklappen um 90° den Bodenbereich des Moduls bilden. Die Laschen 27 schließen sich umfangsmäßig aneinander an.

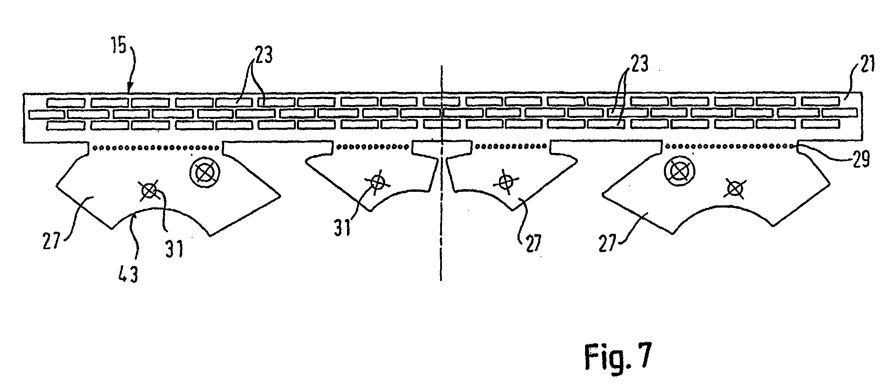

In Figur 7 ist ferner dargestellt, daß der umlaufende Rand 21 quer zur Umlaufrichtung, d.h. in axialer Richtung des Gasgenerators mehrere nacheinander angeordnete Aussparungen 23 besitzt. Es sind genauer gesagt drei Reihen von aufeinanderfolgenden Aussparungen vorgesehen, wobei die einzelnen Aussparungen benachbarter Reihen zueinander versetzt sind. Der Rand 21 erhält dadurch einen deformierbaren Bereich, in dem die Stabilität des Randes gezielt verringert wird.

## Patentansprüche

1. Baueinheit für ein Gassack-Modul, insbesondere ein Lenkrad-Gassack-Modul, bestehend aus
einem Gasgeneratorträger (1) und
einer Abdeckkappe (3),
**dadurch gekennzeichnet, daß**
der Gasgeneratorträger (1) aus einem ausgestanzten und umgeformten Blechabschnitt besteht, der randseitig formschlüssig in die aus Kunststoff bestehende Abdeckkappe (3) eingebunden ist und der Laschen (27) aufweist, die einwärts und aufeinander zu umklappbar sind, um einen durch die Abdeckkappe (3) und den Gasgeneratorträger (1) begrenzten Aufnahmeraum für den Gassack rückseitig zu schließen.

2. Baueinheit nach Anspruch 1, **dadurch gekennzeichnet, daß** der Blechabschnitt bei der gießtechnischen Herstellung der Abdeckkappe (3) formschlüssig in diese eingebunden worden ist.

3. Baueinheit nach Anspruch 1 oder 2, **dadurch gekennzeichnet, daß** die Laschen (27) etwa rechtwinklig um Biegelinien umklappbar sind, längs derer im Blechabschnitt eine Materialschwächung (29) ausgebildet ist.

4. Baueinheit nach Anspruch 3, **dadurch gekennzeichnet, daß** die Materialschwächung (29) durch Perforieren ausgebildet ist.

5. Baueinheit nach einem der vorhergehenden Ansprüche, **dadurch gekennzeichnet, daß** der Blechabschnitt einen Randbereich aufweist, der durch Abkanten zu einem umlaufenden Rand (21) umgeformt ist.

6. Baueinheit nach Anspruch 5, **dadurch gekennzeichnet, daß** im Randbereich Aussparungen (23) für den formschlüssigen Eingriff des Kunststoffmaterials der Abdeckkappe (3) vorgesehen sind.

7. Baueinheit nach Anspruch 6, **dadurch gekennzeichnet, daß** der umlaufende Rand (21) quer zur Umlaufrichtung mehrere nacheinander angeordnete Aussparungen (17) zur Bildung eines deformierbaren Bereichs aufweist.

8. Baueinheit nach einem der Ansprüche 5 bis 7, **dadurch gekennzeichnet, daß** der Gasgeneratorträger (1) mehrere umklappbare Laschen (27) aufweist, die am umlaufenden Rand (21) angeordnet sind.

9. Baueinheit nach Anspruch 8, **dadurch gekennzeichnet, daß** die Laschen (27) jeweils wenigstens einen unter etwa 45° nach außen vorstehenden Montageflansch (33) sowie an ihrem freien Rand (43) eine Kunststoffeinfassung (45) aufweisen.

10. Baueinheit nach Anspruch 8, **dadurch gekennzeichnet, daß** an den Laschen (27) Befestigungseinrichtungen zur Befestigung des Moduls fahrzeugseitig vorgesehen sind.

11. Gassack-Modul, mit
einer Baueinheit nach einem der Ansprüche 1 bis 10,
einem in der Baueinheit untergebrachten Gassack (5) und einem Gasgenerator (11),
wobei die Laschen (27) nach dem Umklappen um etwa 90° jeweils einen Abschnitt eines Bodenbereichs bilden, der eine Ausnehmung (41) für die Anordnung des Gasgenerators (11) sowie Öffnungen (31) für Verbindungsschrauben (47) aufweist, mittels derer ein Gassackhalteblech (9) als Teil des Gassack-Moduls und ein Flansch (51) des Gasgenerators (11) mit dem Gasgeneratorträger (1) zu dem Gassack-Modul verbunden sind,
wobei der Gassack (5) eine Einblasöffnung hat, die durch einen Rand (7) des Gassacks definiert ist, und
wobei der Rand (7) der Einblasöffnung des Gassacks (5) zwischen dem Gassackhalteblech (9) und dem freien Rand (43) der Laschen (27) geklemmt ist.

12. Gassack-Modul nach Anspruch 11, **dadurch gekennzeichnet, daß** der Gasgenerator (11) unmittelbar an den Laschen (27) befestigt ist.

13. Gassack-Modul nach Anspruch 11 oder 12, **dadurch gekennzeichnet, daß** die Laschen in einer Ebene liegen.

## Claims

1. A structural unit for a gas bag module, in particular for a steering wheel gas bag module, consisting of
a gas generator carrier (1) and
a covering cap (3),
**characterized in that**
the gas generator carrier (1) consists of a punched-out and reshaped sheet metal section which is incorporated on the edge in a form-fitting manner into the covering cap (3) consisting of plastic and which has tongues (27) which can be folded over inwards and towards each other to close the rear side of an accommodation space for the gas bag, the accommodation space being defined by the covering cap (3) and the gas generator carrier (1).

2. The structural unit according to Claim 1, **characterized in that** the sheet metal section has been incorporated in the covering cap (3) in a form-fitting manner during the production of the covering cap (3) by a casting technique.

3. The structural unit according to Claim 1 or 2, **characterized in that** the tongues (27) can be folded over approximately at right angles about bending lines along which a zone of weakened material (29) is formed in the sheet metal section.

4. The structural unit according to Claim 3, **characterized in that** the zone of weakened material (29) is formed by perforating.

5. The structural unit according to any of the preceding claims, **characterized in that** the sheet metal section has a marginal region which is reshaped by bordering to form a surrounding rim (21).

6. The structural unit according to Claim 5, **characterized in that** in the marginal region recesses (23) are provided for the form-fitting engagement of the plastic material of the covering cap (3).

7. The structural unit according to Claim 6, **characterized in that** the surrounding rim (21) has several recesses (17) arranged in succession transversely to the circumferential direction to form a deformable region.

8. The structural unit according to any of Claims 5 to 7, **characterized in that** the gas generator carrier (1) has several tongues (27) which can be folded over and are arranged on the surrounding rim (21).

9. The structural unit according to Claim 8, **characterized in that** the tongues (27) each have at least one mounting flange (33) projecting outwards at approximately 45° and also have a plastic border (45) at their free edge (43).

10. The structural unit according to Claim 8, **characterized in that** fastening means are provided on the tongues (27) for fastening the module on the vehicle side.

11. A gas bag module, comprising
a structural unit according to any of Claims 1 to 10,
a gas bag (5) accommodated in the structural unit and a gas generator (11),
the tongues (27), after folding through approximately 90°, each forming one section of a base region, which has a recess (41) for arranging the gas generator (11) and openings (31) for connecting bolts (47), by means of which a gas bag holding plate (9) as part of the gas bag module and a flange (51) of the gas generator (11) are connected with the gas generator carrier (1) to form the gas bag module,
the gas bag (5) having an inflation opening which is defined by a rim (7) of the gas bag, and
the rim (7) of the inflation opening of the gas bag (5) being clamped between the gas bag holding plate (9) and the free edge (43) of the tongues (27).

12. The gas bag module according to Claim 11, **characterized in that** the gas generator (11) is fastened directly to the tongues (27).

13. The gas bag module according to Claim 11 or 12, **characterized in that** the tongues lie in one plane.

## Revendications

1. Ensemble pour un module de coussin à gaz, en particulier pour un module de coussin à gaz pour volant de direction, constitué par
un support (1) de générateur de gaz et
un couvercle (3),
**caractérisé en ce que**
le support (1) de générateur de gaz est constitué par une portion de tôle estampée et façonnée qui est incorporée dans le couvercle (3) réalisé en matière plastique, sur le bord par coopération de formes, et qui présente des pattes (27), lesquelles peuvent être rabattues vers l'intérieur et les unes sur les autres pour fermer sur la face postérieure un espace de réception destiné au coussin à gaz, lequel est limité par le couvercle (3) et par le support (1) de générateur de gaz.

2. Ensemble selon la revendication 1, **caractérisé en ce que** la portion de tôle a été incorporée dans le couvercle (3) par coopération de forme lors de la fabrication du couvercle (3) par technique de moulage.

3. Ensemble selon la revendication 1 ou 2, **caractérisé en ce que** les pattes (27) peuvent être rabattues approximativement en angle droit autour de lignes de pliage le long desquelles un affaiblissement de matériau (29) est réalisé dans la portion de tôle.

4. Ensemble selon la revendication 3, **caractérisé en ce que** l'affaiblissement de matériau (29) est réalisé par perforation.

5. Ensemble selon l'une des revendications précédentes, **caractérisé en ce que** la portion de tôle présente une région de bord qui est façonnée par repliage pour former un bord périphérique (2 1 ).

6. Ensemble selon la revendication 5, **caractérisé en ce que** dans la région de bord sont prévus des évidements (23) pour l'engagement, par coopération de formes, du matériau en matière plastique du couvercle (3).

7. Ensemble selon la revendication 6, **caractérisé en ce que** le bord périphérique (21) présente transversalement à la direction périphérique plusieurs évidements (17) agencés les uns derrière les autres pour former une région déformable.

8. Ensemble selon l'une des revendications 5 à 7, **caractérisé en ce que** le support (1) de générateur de gaz présente plusieurs pattes (27) rabattables qui sont agencées sur le bord périphérique (21).

9. Ensemble selon la revendication 8, **caractérisé en ce que** les pattes (27) présentent chacune au moins une bride de montage (33) faisant saillie vers l'extérieur à environ 45°, ainsi qu'une monture de matière plastique sur leur bord (43) libre.

10. Ensemble selon la revendication 8, **caractérisé en ce que** sur les pattes (27) sont prévus des moyens de fixation pour fixer le module côté véhicule.

11. Module de coussin à gaz comportant
un ensemble selon l'une des revendications 1 à 10,
un coussin à gaz (5) logé dans l'ensemble et un générateur de gaz (11),
les pattes (27) formant chacune, après le rabattement d'environ 90°, un tronçon d'une région de fond qui présente un évidement (41) pour l'agencement du générateur de gaz (11) ainsi que des ouvertures (31) pour des vis de liaison (47) au moyen desquelles une tôle de retenue (9) du coussin à gaz, en tant que partie du module de coussin à gaz, et une bride (51) du générateur de gaz (11) sont reliées avec le support (1) de générateur de gaz pour former le module de coussin à gaz,
le coussin à gaz (5) ayant un orifice d'insufflation qui est défini par un bord (7) du coussin à gaz, et
le bord (7) de l'orifice d'insufflation du coussin à gaz (5) étant serré entre la tôle de retenue (9) du coussin à gaz et le bord libre (43) des pattes (27).

12. Module de coussin à gaz selon la revendication 11, **caractérisé en ce que** le générateur de gaz (11) est fixé directement sur les pattes (27).

13. Module de coussin à gaz selon la revendication 11 ou 12, **caractérisé en ce que** les pattes se trouvent dans un plan.
